# EUROPEAN PATENT SPECIFICATION

(11) **EP 1 187 878 B1**
(45) Date of publication and mention of the grant of the patent: **03.11.2004**
(21) Application number: 00914212.6
(22) Date of filing: 24.03.2000
(51) Int. Cl.: C08L 61/06, C08G 8/04

(54) **METHOD FOR THE PREPARATION OF POLYMERS**
VERFAHREN ZUR HERSTELLUNG VON POLYMEREN
PROCEDE SERVANT A PREPARER DES POLYMERES

(30) Priority: 26.03.1999 FI 990674; 26.03.1999 FI 990675
(43) Date of publication of application: 20.03.2002
(73) Proprietor: Dynea Chemicals OY, 00170 Helsinki (FI)
(72) Inventor: MATILAINEN, Leena, FIN-02700 Kauniainen (FI); BIAN, Guomin, Toronto, Ontario M2H 1W7 (CA); OSTIGUY, Claude, Blainville, Québec J7C 5M4 (CA); CHENG, Rick, Mississauga, Ontario L5R 1N8 (CA); SATULI, Matti, FIN-49400 Hamina (FI); LESKINEN, Kari, FIN-06100 Porvoo (FI); TANG, Kwok, Mississauga, Ontario L5M 4Z3 (CA)
(74) Representative: Hakkila, Maini Annika
(86) International application number: PCT/FI2000/000244
(87) International publication number: WO 2000/058400

(56) References cited:
- CH-A- 466 557
- US-A- 4 026 848
- US-A- 4 098 770
- US-A- 4 131 582
- US-A- 4 904 516
- US-A- 5 371 140
- DATABASE WPI Derwent Publications Ltd., London, GB; AN 1995-093985, XP002965105 SUMITOMO DULEZ KK.: 'Prepn. of pale colour phenol resin emulsion for binding inorganic fibre - comprises reacting phenol(s) and aldehyde(s) in presence of catalyst contg. barium hydroxide, neutralising with agent contg. sulphuric acid and mixing with PVA' & JP 7 018 159 A 20 January 1995
- DATABASE FILE CAPLUS, STN INTERNATIONAL ACC. NO. 1995:475862, DOC. NO. 122:316563 SUMITOMO DUREZ CO.: 'Preparation of light-colored phenolic resin emulsions as binders for inorganic fibers', XP002956113 & JP 07 018 159 A 20 January 1995
- DATABASE WPI Derwent Publications Ltd., London, GB; AN 1995-390422, XP002956106 SHOWA HIGH POLYMER CO LTD.: 'Phenolic resin compsn. used as impregnating material for paper, etc. - comprises phenolic resin compounded with casein or casein deriv. and anionic surfactant and is self-emulsifiable, etc.' & JP 7 268 181 A 17 October 1995
- DATABASE WPI Derwent Publications Ltd., London, GB; AN 1978-42881A, XP002956107 HAYASHIBARA BIOCHEMICAL LAB ET AL.: 'Stable phenolic resin prepn. - by reacting phenol cpd. and formaldehyde, using pullulan as emulsifier under alkaline conditions' & JP 53 049 095 A 04 May 1978
- DATABASE WPI Derwent Publications Ltd., London, GB; AN 1982-27068E, XP002956108 MATSUSHITA ELECTRIC WORKS LTD.: 'Aq. phenol resin dispersion prodn. - using nonionic emulsifier and glycidyl ether' & JP 57 034 114 A 24 February 1982
- DATABASE WPI Derwent Publications Ltd., London, GB; AN 1999-232624, XP002956109 GUNEI KAGAKU KOGYO KK.: 'Manufacture of phenol resin for use as grindstone, filler, carbon electrode etc - involves condensing aqueous solution, of phenol and aldehyde in presence of high molecular surfactant as emulsified dispersing agent and alkylamine compound as catalyst' & JP 11 060 664 A 02 March 1999
- DATABASE FILE CAPLUS, STN INTERNATIONAL, ACC. NO. 1999:142436, DOC. NO. 130:252838 GUNEI CHEMICAL INDUSTRY CO., LTD.: 'Manufacture of spherical pressure-sensitive thermally self-curable phenolic resin particles', XP002956114 & JP 11 060 664 A 02 March 1999

## Description

The present invention relates to a colourless or light-coloured crosslinked phenolic polymer network achieved using phenolic resin emulsions and/or dispersions or powders made from such emulsions and/or dispersions, in the curing process, and to a method for the manufacture of phenolic resin emulsions and/or dispersions and of powders from such emulsions and/or dispersions. In particular this invention relates to stable phenolic resin emulsions and/or dispersions and powders which form a colourless or light-coloured glueline or surface when cured.

Phenolic resins are broadly used and commercially important materials, which are applied in a wide range of products. Examples of such products include coatings, binders for inorganic materials or for organic materials, laminates, mouldings, castings and adhesives. However, conventional resins have shown several problems relating to quality and storage stability. One of the major problems is that conventional phenolic resins are red-brownish in colour and thus they are not suitable for applications where colourless resins are needed. Conventional resole resins form strongly red-brownish curing products. Several attempts have been made to overcome the problem of the colouring of the resin. A method for the preparation of a resole, which has colourless or light-coloured nature, is disclosed in *FI patent application 961331*. The object has been achieved by preparing, storing and using the resole in the absence of oxygen under an inert gas atmosphere, such as nitrogen atmosphere, in order to avoid the formation of the undesired red-brownish compounds. However, constant inert gas atmosphere is often difficult to achieve.

The reduction of discolouration of a phenol formaldehyde resin composition is mentioned in a method disclosed in *GB 2 229 509* wherein an additive such as a reaction product of a hemifonnal with urea and formaldehyde is incorporated into the composition. However, this method is cumbersome because of several additional process steps.

The manufacture of phenolic dispersions is well known in art. For example, phenolic resins manufactured using Pullulan as the emulsifier are disclosed in the publication *JP 53049095*. The use of Pullulan as the surfactant results in a stable phenolic emulsion. The publication does not, however, describe a method for preparation of a colourless crosslinked phenolic polymer network using phenolic emulsions and /or dispersions as precursors.

Based on the above, it can be seen that there clearly exists a need for a simple and efficient method for the manufacture of phenolic systems, which form a colourless or light-coloured crosslinked phenolic polymer network when cured, for such phenolic resin emulsions and/or dispersions and for powders made therefrom.

An object of the invention is to provide a method for the manufacture of a colourless or light-coloured crosslinked phenolic polymer network when thermoset cured, using phenolic resin emulsions and/or dispersions and powders made from such phenolic resin emulsions and/or dispersions as precursors.

Another object of the invention is to provide a method for the manufacture of phenolic resin emulsions and/or dispersions and of powders made from such phenolic resin emulsions and/or dispersions, which form a colourless or light-coloured crosslinked phenolic polymer network when cured.

A further object of the invention is to provide phenolic resin emulsions and/or dispersions, and powders made from such phenolic resin emulsions and/or dispersions, which form a colourless or light-coloured crosslinked polymer network when cured.

Characteristic features of the method for the manufacture of phenolic resin emulsions and/or dispersions and of powders made from such phenolic resin emulsions and/or dispersions, and of a colourless or a light-coloured crosslinked, phenolic polymer network when cured are stated in the claims.

It has been found that the objectives can be attained by the method according to the invention. In the method, resins are prepared by condensation of aldehydes (F) and phenolic compounds (P) in a molar ratio of 1.05:1-4:1, preferably 2:1-3:1 (F/P) at elevated temperatures in the presence of a sufficient amount of water to adjust the amount of dry solids in the product to 25-75 wt%, preferably to 35-60 wt%, and in the presence of an alkaline catalyst and surface active agent(s). At a desired step of the condensation, the pH of the resin is adjusted to a value below 9, preferably to a value below 8, using an acid. A sufficient amount of a specified surface active agent(s) is added. If no surface active agent is present, the obtained resin precipitates out of the solution and forms large aggregates, which are not easily water-dispersible or dilutable. An emulsion is formed during the condensation step or during the pH adjustment. The surface active agent can be added at any suitable step during the reaction prior to the pH adjustment.

Alternatively, the process can also be performed as post-emulsification wherein conventional phenolic resins of similarly defined molar ratio can be used as starting materials. The pH of the phenolic resin is adjusted to a value below 9, preferably to a value below 8, using an acid, in the presence of a surface active agent or a combination of surface active agents. An emulsion is formed during the pH adjustment of the resin. The surface active agent or a mixture of surface active agents is added prior to the pH adjustment.

The obtained product is a phenolic resin emulsion and/or dispersion, which forms a colourless or light-coloured crosslinked polymer network when cured. The characteristic colourless or light-coloured nature of the cured product is achieved when the resin is made according to the invention, in which the pH of the condensation product is adjusted to a value below 9 in the presence of a specified surface active agent or a mixture of specified surface active agents.

The condensation reaction takes place in the presence of an alkaline catalyst, such as an oxide, a hydroxide or a carbonate of an alkali metal or of an alkaline-earth metal, suitably NaOH, KOH, LiOH, Ca(OH)₂, Ba(OH)₂, MgO or CaO, of an organic base such as ammonia, a tertiary amine, or of mixtures thereof. A suitable acid for the pH adjustment is an organic or an inorganic acid, such as p-toluene sulphonic acid, sulphuric acid, acetic acid, phosphoric acid or formic acid or the like or mixtures thereof. A suitable surface active agent is starch, such as wheat starch, corn starch or potato starch, or modified starch, such as modified wheat starch, modified corn starch or modified potato starch, modified or unmodified acrylic homopolymer or copolymer, such as hydrophobically modified acrylic copolymer, cellulose, modified cellulose, such as hydroxy ethyl cellulose, a protein derivative such as sodium caseinate, or a mixture thereof. Modified starch, such as modified wheat starch, modified corn starch or modified potato starch, modified acrylic copolymer such as hydrophobically modified acrylic copolymer, modified cellulose, such as hydroxy ethyl cellulose or sodium caseinate are specially suited for the resin products providing the desired colourless or light-colored crosslinked phenolic polymer network, and particularly preferable is hydrophobically modified acrylic copolymer. 0.01-10 wt%, preferably 0.5-8.0 wt% of surface active agent(s) is used.

The method according to the invention for the preparation of a phenolic resin emulsion and/or dispersion is described in more detail in the following.

An aldehyde compound, such as formaldehyde, para-formaldehyde, hexamethylene tetramine, acetaldehyde, furfural, acrolein and preferably formaldehyde, a phenolic compound, such as *o*-, *m*-*, p*-cresol, ethylphenol, propylphenol, para-*tert*-butylphenol, amylphenol, octylphenol, cyclohexylphenol, nonylphenol, dodecylphenol, chlorinated phenols and preferably phenol, water and a surface active agent, suitably starch, such as wheat starch, corn starch or potato starch, or modified starch, such as modified wheat starch, modified corn starch or modified potato starch, or modified or unmodified acrylic homopolymer or copolymer, such as a hydrophobically modified acrylic copolymer, cellulose, modified cellulose such as hydroxy ethyl cellulose, a protein derivative such as sodium caseinate, or a mixture thereof are charged into a reaction vessel. Anti-foaming agents and other additives known in the art may also be used. Alternatively, the surface active agent can be added at any stage of the reaction prior to the pH adjustment or prior to advanced condensation. The alkaline catalyst, NaOH, KOH, LiOH, Ca(OH)₂, Ba(OH)₂, MgO, CaO or an organic base, such as ammonia or a tertiary amine, preferably triethylamine or mixtures thereof is then added and the temperature is raised to 40-100 °C, preferably to 60-90 °C, and the temperature is maintained at elevated temperature until a desired degree of condensation is achieved. The degree. of condensation can be followed by a suitable method, for example by viscosity measurement or by cloud point tests. The obtained condensation product is then optionally cooled down and the cooling may optionally be performed under vacuum. The pH of the resin is adjusted using a suitable acid, preferably sulphuric acid, acetic acid, formic acid, p-toluene sulphonic acid, phosphoric acid or a mixture thereof at a temperature below the boiling point, preferably at 20-70 °C. Under normal pressure the temperature is preferably 100 °C or less. The pH adjustment may be performed during the resin manufacturing process and it may also optionally be performed later, before use of the resin on site.

Alternatively, conventional phenolic resins can also be dispersed according to the invention. A condensation product, phenolic resol resin, such as a commercial phenolic resol resin, is heated to a temperature below the boiling point, preferably to 20-70 °C, and 0.01-10 wt%, preferably 0.5-8.0 wt% of a surface active agent or a mixture of surface active agents, suitably starch, such as wheat starch, corn starch or potato starch, or modified starch, such as modified wheat starch, modified corn. starch or modified potato starch, or modified or unmodified acrylic homopolymer or copolymer, such as a hydrophobically modified acrylic copolymer, cellulose, modified cellulose such as hydroxy ethyl cellulose, a protein derivative such as sodium caseinate, or a mixture thereof, is added. Under normal pressure the temperature is preferably 100°C or less. The pH of the resin is adjusted to a value below 9, preferably to a value below 8 using an acid, preferably sulphuric acid, acetic acid, formic acid, p-toluene sulphonic acid, phosphoric acid or a mixture thereof. The adjustment may be performed during the resin manufacturing process and it may also optionally be performed before use of the product.

Further, it has been found that phenolic resin dispersions according to the invention are well-suited for spray-drying and freeze-drying, yielding homogeneous and stable powdery products with superior stability and quality, and which provide colourless or light-coloured crosslinked polymer network when cured. The phenolic resin dispersion is spray-dried as such or as diluted with water in a ratio of 0-1:30 before spray-drying. A powder is obtained, the particle size being adjustable for the desired field of application. The drying may also be performed using freeze-drying followed by optional milling or micronizing.

Any conventional spray-drying apparatus known in the art may be used for spray-drying. In order to modify the particle size of the product, the surface tension of the resin dispersion can optionally be modified before spray-drying by using additives, such as surfactants. Alternatively all components may also be blended in-line before spray-drying.

Any suitable freeze-drying apparatus may be used for freeze-drying. Additionally, the freeze-dried product may be milled or micronized to a homogeneous powder using any suitable apparatus. The powdered phenolic resin from a dispersion may be reconstituted by addition of water prior to application.

Spray-drying or freeze-drying provides the phenolic resin emulsions and/or dispersions several advantages, such as improved stability during storage and easy transportation because less space is needed. Powdered resins are suitable for processes using powdered starting materials. Also, the characteristic colourless or light-coloured nature of the cured products of the phenolic resin emulsions and/or dispersions is maintained after the resin is dried to powder and cured.

According to the invention phenolic resin emulsions and/or dispersions are manufactured, wherein the viscosity can be accurately adjusted between 20 and 10000 cP, and the products can readily be diluted with water and spray-dried. The phenolic resin emulsions and/or dispersions and the powdered phenolic resins from the emulsions and/or dispersions made according to the present invention, giving the cured crosslinked phenolic polymer network a colourless or light-coloured appearance, are highly desired in several application areas, such as in composite wood board (e.g. oriented strand board, fibre board and particle board) preparation and also in plywood, laminated veneer lumber and laminated beam preparations, in insulating materials, in fibre tissues, in rubber materials, in non-wovens and in paper impregnations, in roofing mats or when used as fillers or in moulding materials.

The major characteristic features of the products obtained when the phenolic resin emulsion and/or dispersions, and the powdered resins made from the emulsion and/or dispersions according to the invention, are used in the applications are a natural looking finish without red-brownish gluelines, surfaces or spots, and as being made of phenolic resins, the products retain tolerance for demanding conditions, such as high humidity and moisture. The phenolic resin emulsions and/or dispersions and powders made from the emulsions and/or dispersions according to the invention have significant advantages compared with the resins according to prior art, because the product and the crosslinked form of the resin according to the invention will remain colourless or light-coloured under acidic or neutral conditions, and requires no additional handling procedures. The resin powders can also be used as moulding materials. The phenolic resin emulsions and/or dispersions and resin powders, producing colourless or light-coloured crosslinked polymer networks can be expected to replace aminoplastic resins, such as melamine-aldehyde condensation products in several applications.

The invention is illustrated in the following by examples with some preferred embodiments of the invention to which, however, the invention is not limited.

### Example 1

### Preparation of a phenolic resin emulsion and/or dispersion.

200 g of phenol, 372 g of formaldehyde (48 % water solution) and 300 g of water were charged into a reaction vessel. 50 g of NaOH (50 % water solution) was carefully added to the reaction mixture. The temperature was raised and maintained below 75 °C. 37 g of Acrysol® (a hydrophobically modified acrylic copolymer) was added and the temperature was raised and maintained below 95 °C during the condensation reaction. The temperature was dropped to 80 °C or less. The condensation reaction was continued until a viscosity of 2000 cP was reached. The pH was adjusted to pH 6 using formic acid solution. A dispersion was formed during the pH adjustment. The product was cooled.

### Eexample 2

### Evaluation of the colour of the crosslinked form of the product obtained in Example 1

Plywood was made using the product of Example 1 in order to visually evaluate the colour of its crosslinked form, i.e. glueline.

| | |
|---|---|
| Structure | 5 x 1.5 mm (Birch) |
| Glue spreading | 160 g/m² |
| Pre-pressing | 0.8 MPa/8 min. |
| Hot pressing | 130 °C/6 min |

Visual evaluation of the panels indicated that the panels were lacking the dark red glue lines and these glue lines being colourless in appearance.

### Example 3

### Spray-drying of the product of Example 1

The product of Example 1 can be spray-dried, conditions are given in Table 1. Equal amounts of the product described above and of water were used.

**Table 1**

| | Diff. Pressure (mm of water) | Inlet Temperature (°C) | Outlet Temperature (°C) | Pump Feed rate (%) | Atomizer Current (A) |
|---|---|---|---|---|---|
| Start | 95 | 174 | 75 | 54 | 3.3 |
| | 95 | 174 | 75 | 53 | 3.3 |
| | 95 | 174 | 76 | 55 | 3.4 |
| | 95 | 174 | 76 | 66 | 3.4 |
| | 90 | 174 | 75 | 65 | 3.4 |
| End | 92 | 175 | 75 | 65 | 3.4 |
| - Energy 42 kW | | | | | |

### Example 4

### Preparation of a phenolic resin emulsion and/or dispersion

250 g of phenol, 465 g of formaldehyde (48% water solution), 375 g of water and 46 g of Raisamyl® (a modified potato starch) were charged into a reaction vessel. 63 g of NaOH (50 % water solution) was carefully added. The temperature of a reaction mixture was raised and maintained below 100 °C. The condensation reaction was then continued until a viscosity of 1000 cP was reached. The pH was adjusted to pH 5. The pH adjustment was performed using formic acid solution. The product was cooled.

### Example 5

### Spray-drying of the product of Example 4

The product of the Example 4 can be spray-dried, conditions are given in Table 2. Equal amounts of the product from Example 4 and of water were used.

**Table 2**

| | Diff. Pressure (mm of water) | Inlet Temperature (°C) | Outlet Temperature (°C) | Pump Feed rate (%) | Atomizer Current (A) |
|---|---|---|---|---|---|
| Start | 100 | 193 | 86 | 55 | 3.3 |
| | 105 | 194 | 86 | 55 | 3.4 |
| | 105 | 195 | 86 | 55 | 3.4 |
| | 105 | 195 | 88 | 60 | 3.3 |
| | 100 | 195 | 88 | 69 | 3.4 |
| | 100 | 194 | 86 | 70 | 3.3 |
| End | 100 | 194 | 85 | 70 | 3.3 |
| - Energy 36 kW | | | | | |

Characteristics of the powders of the Examples 3 and 5 are presented in the Table 3.

**Table 3**

| Powder | Stroke Cure Test | | Flowability |
|---|---|---|---|
| | Spray Dry Powder (sec) | Freeze Dry Powder (sec) | |
| Ex. 1 Emulsion | 27 | 29 | Good |
| Ex. 2 Emulsion | 24 | 25 | Good |

### Example 6

### Preparation of a phenolic resin emulsion and/or dispersion

200 g of phenol, 372 g of formaldehyde (48 %) and 300 g of water were charged into a reaction vessel. 90 g of triethylamine was carefully added. The temperature was raised and maintained below 95 °C until the desired condensation degree was reached. 40 g of Acrysol® (a hydrophobically modified acrylic copolymer) was added at the temperature of 50-80 °C. The pH of the resin was adjusted with formic acid to pH 6. A dispersion was formed. The product was cooled.

### Example 7

### Evaluation of the colour of the crosslinked form of the products produced in Examples 1, 3, 4, 5 and 6

OSB (oriented strand boards) panels were made using the products produced in the examples 1 and 3-6, in the following conditions.

Products of the Examples 1, 4 and 6:

| | |
|---|---|
| Furnish wood species | Pine |
| Face resin/dosage | Produce 1,4 or 6 / 3.2 wt% |
| Core resin/dosage | Commercial OSB core resin / 6.0 wt% |
| Furnish moisture content | Face: 7.2-8.0 %; Core: 6.9-9.4 % |
| Mat Forming | Random / 60:40 |
| Press temperature | 210 °C |
| Total press time | 240 sec |
| Target panel thickness | 11 mm |
| Mat size | 50 x 50 cm |
| Caul type | Screen |

Visual comparison to the commercial panels indicated that the panels made using the products produced according to Examples 1, 4 and 6 were lacking the dark red glue spots and glue spots were colourless in appearance.

Powered products produced in Examples 3 and 5:

| | |
|---|---|
| Furnish wood species | Pine |
| Powder face resin/dosage | Powdered product 3 or 5 / 2.0 wt% |
| Core resin/dosage | Commercial OSB core resin / 4.0 wt% |
| Furnish moisture content | Face 5.7-5.9 % ; Core 4.3-4.8 % |
| Mat forming | Random / 60:40 |
| Press temperature | 210 °C |
| Total press time | 240 sec. |
| Target panel thickness | 11 mm |
| Mat size | 50 x 50 cm |
| Caul type | Screen |

Visual evaluation of the panels made using the powdered products produced according to Examples 3 and 5 indicated that they were lacking the red glue spots which could be seen in the commercial panels.

### Example 8

### Preparation of a phenolic resin emulsion and/or dispersion using a conventional resin as a precursor

500 g of phenolic resin was placed into a reaction vessel and warmed up to 50 °C. 20 g of Acrysol® (a hydrophobically modified acrylic copolymer) was added under stirring. The pH of the resin was adjusted with formic acid to a pH value of 6. An emulsion was formed. The product was cooled.

### Example 9

Plywood panels were made using the product of Example 8 in the following conditions:

| | |
|---|---|
| Panel structure | 2 x 2.5 mm (spruce) / 5 x 1.5 mm |
| Glue spreading | 200 g/m² |
| Pre-pressing | 0.8 MPa/8 min. |
| Hot pressing | 140 °C/20 min. |

Gluelines were colourless. For comparison, panels were made by glueing upper layers with the product of Example 8 and the mid-layers with a conventional resol in the above conditions. Significant difference in the colour of the gluelines were obtained, the product of Example 8 giving colourless glueline and the conventional resol giving dark reddish glueline.

### Example 10

### Preparation of a phenolic resin emulsion and/or dispersion using a conventional resin as a precursor

500 g of phenolic resin was placed into a reaction vessel and warmed up to 50 °C. 80 g of Natrosol® (a hydroxy ethyl cellulose, 50 % solution), was added under stirring. The pH of the resin was adjusted with formic acid to a pH value 6.5. A dispersion was formed. The product was cooled.

### Example 11

### Preparation of a phenolic resin emulsion and/or dispersion

250 g of phenol, 465 g of formaldehyde (48 % water solution), 375 g of water, 46 g of Raisamyl® (a modified potato starch) and 20 g of Meritena™ (an unmodified com starch) were charged into a reaction vessel. 63 g of NaOH (50 % water solution) was carefully added. The temperature of the reaction mixture was raised and maintained below 100 °C. The condensation reaction was then continued until a viscosity of 1000 cP was reached. The pH was adjusted to pH 5. The pH adjustment was performed using formic acid solution. The product was cooled.

## Claims

1. Method for the manufacture of a colourless or light-coloured crosslinked phenolic polymer network upon thermoset curing, **characterized in that** an aldehyde, a phenolic compound selected from phenol, ethyl phenol, propyl phenol or *o*-, *m*-, *p*-cresol and an alkaline catalyst are allowed to react at a temperature of 40-100 °C until a desired degree of condensation is achieved, the pH of the resin is adjusted to a value below 9 using an acid in the presence of a surface active agent selected from starch, modified starch, modified or unmodified acrylic homopolymer or copolymer or a mixture of surface active agents at a temperature below the boiling point and the reaction product is used as a precursor, which is cured to produce a light-coloured or colourless crosslinked phenolic polymer network.

2. Method according to claim 1, **characterized in that** the phenolic compound is phenol, the aldehyde compound is formaldehyde, para-formaldehyde or acetaldehyde and preferably formaldehyde, the molar ratio of an aldehyde (F) and a phenol (P) is 1.05:1-4:1, preferably 2:1-3:1 (F/P) and the reaction is performed in the presence of a sufficient amount of water to adjust the amount of dry solids in the product to 25-75 wt%, preferably to 35-60 wt%, the alkaline catalyst is an oxide, a hydroxide or a carbonate of an alkali metal or an alkaline-earth metal, an organic base or a mixture thereof and the amount of the alkaline catalyst is 0.1-12 wt%.

3. Method according to claim 1 or 2, **characterized in that** the pH of the resin is adjusted to a value below 8.

4. Method according to any one of claims 1-3, **characterized in that** additives, preferably anti-foaming agents are used.

5. Method according to any one of claims 1-4 , **characterized in that** the surface active agent is wheat starch, corn starch, potato starch, modified wheat starch, modified corn starch, modified potato starch or modified acrylic copolymer.

6. Method according to any one of claims 1-5, **characterized in that** the surface active agent is hydrophobically modified acrylic copolymer.

7. Method according any one of claims 1-6, **characterized in that** the amount of the surface active agent is 0.01-10 wt%, preferably 0.5-8.0 wt%.

8. Method according to any one of claims 1-7, **characterized in that** the acid is an organic or an inorganic acid or a mixture thereof.

9. Method according to any one of claims 1-8, **characterized in that** the acid is p-toluene sulphonic acid, acetic acid, sulphuric acid, phosphoric acid or formic acid or a mixture thereof.

10. Method according any one of claims 1-9, **characterized in that** the pH adjustment using an acid is performed during the process or before the use of the product.

11. Method for the manufacture of a precursor or a phenolic resin emulsion and/or dispersion, which provides a colourless or light-coloured crosslinked polymer network upon thermoset curing, **characterized in that** an aldehyde, a phenolic compound selected from phenol, ethyl phenol, propyl phenol or *o*-*, m*-*, p*-cresol and an alkaline catalyst are allowed to react at a temperature of 40-100°C until a desired degree of condensation is achieved, and the pH of the resin is adjusted to a value below 9 using an acid in the presence of a surface active agent selected from starch, modified starch, modified or unmodified acrylic homopolymer or copolymer or a mixture thereof at a temperature below the boiling point and a phenolic resin emulsion and/or dispersion is obtained.

12. Method according to claim 11, **characterized in that** the phenolic compound is phenol, the aldehyde compound is formaldehyde, para-formaldehyde or acetaldehyde and preferably formaldehyde, the molar ratio of an aldehyde (F) and phenol (P) is 1.05:1-4:1, preferably 2:1-3:1 (F/P) and the reaction is performed in the presence of a sufficient amount of water to adjust the amount of dry solids in the product to 25-75 wt%, preferably to 35-60 wt%, the alkaline catalyst is an oxide, a hydroxide or a carbonate of an alkali metal or an alkaline-earth metal, an organic base or a mixture thereof and the amount of the alkaline catalyst is 0.1 - 12 wt%.

13. Method according to claim 1 or 12, **characterized in that** the pH of the resins is adjusted to a value below 8.

14. Method according to any one of claims 1-13, **characterized in that** additives, preferably anti-foaming agents are used.

15. Method according to any one of claims 11-14, **characterized in that** the surface active agent is wheat starch, corn starch, potato starch, modified wheat starch, modified corn starch, modified potato starch or modified acrylic copolymer.

16. Method according to any one of claims 11-15, **characterized in that** the surface active agent is hydrophobically modified acrylic copolymer.

17. Method according any one of claims 11-16, **characterized in that** the amount of the surface active agent(s) is 0.01-10 wt%, preferably 0.5-8.0 wt%.

18. Method according to any one of claims 11-17, **characterized in that** the acid is an organic or inorganic acid or a mixture thereof.

19. Method according to any one of claims 11-18, **characterized in that** the acid is p-toluene sulphonic acid, acetic acid, sulphuric acid, phosphoric acid or a formic acid or a mixture thereof

20. Method according to any one of claims 11-19, **characterized in that** the pH adjustment using an acid is performed during the process or before the use of the product.

21. Method for the manufacture of a powdered phenolic resin, which provides a colourless or light-coloured crosslinked polymer network upon thermoset curing, **characterized in that** a phenolic resin emulsion and/or dispersion manufactured according to the method of any of claims 11-20 is spray-dried or freeze-dried, and optionally milled or micronized.

22. Method according to claim 21, **characterized in that** the resin emulsion and/or dispersion is dried as such or it is diluted with water in a ratio of 0-1:30 before spray-drying, it optionally comprises additives, and optionally all components are in-line blended before spray-drying.

23. Phenolic resin emulsion and/or dispersion or powdered phenolic resin, **characterized in that** it is manufactured according to any one of claims 11-22.

24. Use of the phenolic resin emulsion and/or dispersion or powdered phenolic resin according to claim 23 in the preparation of plywood, laminated beam and laminated veneer lumber; in the preparation of composite wood boards, such as fibre boards, oriented strand boards and particle boards; in non-wovens, in paper impregnation, in insulation materials, in fibre tissues, in rubber materials, in roofing mats, as fillers and in moulding materials to achieve a colourless or light coloured crosslinked phenolic polymer network upon curing.

## Patentansprüche

1. Verfahren zur Herstellung eines farblosen oder leicht gefärbten vernetzten phenolischen Polymernetzwerks bei Aushärtung mittels Wärme,
**dadurch gekennzeichnet, dass**
ein Aldehyd, eine phenolische Verbindung, ausgewählt aus Phenol, Ehtylphenol, Propylphenol oder o-, m-, p-Cresol und ein alkalischer Katalysator bei einer Temperatur von 40 bis 100°C zur Reaktion gebracht werden, bis ein gewünschter Konzentrationsgrad erreicht ist, wobei der pH des Harzes auf einen Wert unter 9 unter Verwendung einer Säure in Gegenwart eines oberflächenaktiven Mittels, ausgewählt aus Stärke, modifizierter Stärke, einem modifizierten oder einem unmodifizierten acrylischen Homopolymer oder Copolymer oder einer Mischung aus oberflächenaktiven Mitteln bei einer Temperatur unterhalb des Siedepunkts eingestellt wird, und das Reaktionsprodukt als ein Precursor eingesetzt wird, welcher zur Erzeugung eines leicht gefärbten oder farblosen vernetzten phenolischen Polymernetzwerks ausgehärtet wird.

2. Verfahren nach Anspruch 1, **dadurch gekennzeichnet, dass** die phenolische Verbindung Phenol ist, die Aldehydverbindung Formaldehyd, Paraformaldehyd oder Acetaldehyd und bevorzugt Formaldehyd ist, wobei das molare Verhältnis des Aldehydd (F) und des Phenols (P) bei 1,05:1 bis 4:1 und bevorzugt bei 2:1 bis 3:1 (F/P) liegt und die Reaktion in Gegenwart einer zur Einstellung der Menge an trockenen Feststoffen in dem Produkt auf 25 bis 75 Gew.-%, bevorzugt auf 35 bis 60 Gew.-%, hinreichenden Menge Wasser durchgeführt wird, wobei der alkalische Katalysator ein Oxid, ein Hydroxid oder ein Carbonat eines Alkalimetalls oder eines Erdalkalimetalls, eine organische Base oder eine Mischung davon ist und die Menge des alkalischen Katalysators bei 0,1 bis 12 Gew.-%, liegt.

3. Verfahren nach Anspruch 1 oder 2, **dadurch gekennzeichnet, dass** der pH des Harzes auf einen Wert unter 8 eingestellt wird.

4. Verfahren gemäß irgend einem der Ansprüche 1-3, **dadurch gekennzeichnet, dass** Additive und bevorzugt Antischäummittel eingesetzt werden.

5. Verfahren nach irgend einem der Anspruche 1-4, **dadurch gekennzeichnet, dass** das oberflächenaktive Mittel Weizenstärke, Maisstärke, Kartoffelstärke, modifizierte Weizenstärke, modifizierte Maisstärke, modifizierte Kartoffelstärke oder ein modifiziertes acrylisches Copolymer ist.

6. Verfahren nach irgend einem der Ansprüche 1 bis 5, **dadurch gekennzeichnet, dass** das oberflächenaktive Mittel ein hydrophobes modifiziertes acrylisches Copolymer ist.

7. Verfahren nach irgend einem der Ansprüche 1-6, **dadurch gekennzeichnet, dass** die Menge des oberflächenaktiven Mittels bei 0,01 bis 10 Gew.-% und bevorzugt bei 0,5 bis 8,0 Gew.-%.

8. Verfahren nach irgend einem der Ansprüche 1-7, **dadurch gekennzeichnet, dass** die Säure eine organische oder eine anorganische Säure oder eine Mischung daraus ist.

9. Verfahren nach irgend einem der Ansprüche 1-8, **dadurch gekennzeichnet, dass** die Säure p-Toluolsulphonsäure, Essigsäure, Schwefelsäure, Phosphorsäure, Ameisensäure oder eine Mischung daraus ist.

10. Verfahren nach irgend einem der Ansprüche 1-9, **dadurch gekennzeichnet, dass** die pH-Einstellung unter Verwendung einer Säure während des Prozesses oder vor dem Einsatz des Produkts durchgeführt wird.

11. Verfahren zur Herstellung eines Precursors oder einer phenolischen Harzemulsion und/oder Dispersion, welches ein farbloses oder leicht gefärbtes Polymernetzwerk bei Aushärtung mittels Wärme zur Verfügung stellt,
**dadurch gekennzeichnet, dass**
ein Aldehyd, eine phenolische Verbindung, ausgewählt aus Phenol, Ehtylphenol, Propylphenol oder o-, m-, p-Cresol, und ein alkalischer Katalysator bei einer Temperatur von 40 bis 100°C zur Reaktion gebracht werden, bis ein gewünschter Kondensationgrad erreicht ist, und der pH des Harzes auf einem Wert unter 9 unter Verwendung einer Säure in Gegenwart eines oberflächenaktiven Mittels, ausgewählt aus Stärke, modifizierter Stärke, einem modfizierten oder einem unmodifizierten acrylischen Homopolymer oder Copolymer oder einer Mischung daraus, bei einer Temperatur unterhalb des Siedepunkts eingestellt wird und eine phenolische Harzemulsion und/oder-Dispersion erhalten wird.

12. Verfahren nach Anspruch 11, **dadurch gekennzeichnet, dass** die phenolische Verbindung Phenol ist, die Aldehydverbindung Formaldehyd, Paraformaldehyd oder Acetaldehyd und bevorzugt Formaldehyd ist, wobei das molare Verhältnis des Aldehyds (F) und des Phenols (P) bei 1,05:1 bis 4:1 und bevorzugt bei 2:1 bis 3:1 (F/P) liegt und die Reaktion in Gegenwart einer zur Einstellung der Menge an trockenen Feststoffen in dem Produkt auf 25 bis 75 Gew.-%, und bevorzugt auf 35 bis 60 Gew.-%, hinreichenden Menge Wasser durchgeführt wird, wobei der alkalische Katalysator ein Oxid, ein Hydroxid oder ein Carbonat eines Alkalimetalls oder eines Erdalkalimetalls, eine organische Base oder eine Mischung daraus ist, und die Menge des alkalischen Katalysators bei 0,1 bis 12 Gew.-%, liegt.

13. Verfahren nach Anspruch 11 oder 12, **dadurch gekennzeichnet, dass** der pH des Harzes auf einen Wert unter 8 eingestellt wird.

14. Verfahren nach irgend einem der Ansprüche 1 bis 13, **dadurch gekennzeichnet, dass** Additive und bevorzugt Antischäumungsmittel eingesetzt werden.

15. Verfahren nach irgend einem der Ansprüche 11 bis 14, **dadurch gekennzeichnet, dass** das oberflächenaktive Mittel Weizenstärke, Maisstärke, Kartoffelstärke, modifizierte Weizenstärke, modifizierte Maisstärke, modifizierte Kartoffelstärke oder ein modifiziertes acrylisches Copolymer ist.

16. Verfahren nach irgend einem der Ansprüche 11 bis 15, **dadurch gekennzeichnet, dass** das oberflächenaktive Mittel ein hydrophobes modifiziertes acrylisches Copolymer ist.

17. Verfahren nach irgend einem der Ansprüche 11 bis 16, **dadurch gekennzeichnet, dass** die Menge des oberflächenaktiven Mittels (der aktiven Mittel) bei 0,01 bis 10 Gew.-%, und bevorzugt bei 0,5 bis 8,0 Gew.-%, liegt.

18. Verfahren nach irgend einem der Ansprüche 11 bis 17, **dadurch gekennzeichnet, dass** die Säure eine organische oder anorganische Säure oder eine Mischung daraus ist.

19. Verfahren nach irgend einem der Ansprüche 11 bis 18, **dadurch gekennzeichnet, dass** die Säure p-Toluolsulphonsäure, Essigsäure, Schwefelsäure, Phosphorsäure oder eine Ameisensäure oder eine Mischung daraus ist.

20. Verfahren nach irgend einem der Ansprüche 11 bis 19, **dadurch gekennzeichnet, dass** die pH-Einstellung unter Verwendung einer Säure während des Prozesses oder vor dem Einsatz des Produkts durchgeführt wird.

21. Verfahren zur Herstellung eines gepulverten phenolischen Harzes, welches ein farbloses oder leicht gefärbtes vernetztes Polymernetzwerk bei Aushärtung mittels Wärme bereitstellt, **dadurch gekennzeichnet, dass** eine phenolische Harzemulsion und/oder Dispersion, hergestellt nach dem Verfahren irgend eines der Ansprüche 11 bis 20, sprühgetrocknet oder gefriergetrocknet und wahlweise gemahlen oder zerkleinert wird.

22. Verfahren nach Anspruch 21, **dadurch gekennzeichnet, dass** die Harzemulsion und/oder -Dispersion als solche getrocknet wird, oder sie mit Wasser in einem Verhältnis von 0-1:30 vor der Sprühtrocknung verdünnt wird, wobei sie wahlweise Additive umfasst, und wahlweise alle Komponenten vor der Sprühtrocknung in Reihe vermischt werden.

23. Phenolische Harzemulsion und/oder-Dispersion oder gepulvertes phenolisches Harz, **dadurch gekennzeichnet, dass** es nach irgend einem der Ansprüche 11-22 hergestellt worden ist.

24. Verwendung der Phenolharzemulsion und/oder -Dispersion oder eines gepulverten Phenolharzes nach Anspruch 23 in der Herstellung von Sperrholz, laminierten Balken und laminiertem Funierholz; in der Herstellung von Verbundholzplatten wie etwa Faserplatten, orientierten Gewebefaserplatten und Spanplatten; in nicht gewebten Waren, in der Papierimprägnierung, in Isoliermaterialien, in Fasergeweben, in Kautschukmaterialien, in Dachmatten, als Füllmittel und in Formmaterialien zur Erzielung eines farblosen oder leicht gefärbten vernetzten phenolischen Polymernetzwerks beim Aushärten.

## Revendications

1. Procédé pour la fabrication d'un réseau réticulé incolore ou légèrement coloré de polymère phénolique avec polymérisation par thermodurcissement, **caractérisé en ce que** l'on fait réagir un aldéhyde, un composé phénolique choisi parmi le phénol, l'éthylphénol, le propylphénol ou le o-, m-, p-crésol et un catalyseur alcalin à une température de 40 à 100°C jusqu'à ce qu'un degré de condensation souhaité soit atteint, le pH de la résine est ajusté à une valeur en dessous de 9 en utilisant un acide en présence d'un agent tensioactif choisi parmi l'amidon, l'amidon modifié, un homopolymère ou copolymère acrylique modifié ou non modifié ou un mélange d'agents tensioactifs à une température en dessous du point d'ébullition et le produit de réaction est utilisé comme un précurseur, qui est polymérisé pour produire un réseau réticulé légèrement coloré ou incolore de polymère phénolique.

2. Procédé selon la revendication 1, **caractérisé en ce que** le composé phénolique est le phénol, le composé aldéhyde est le formaldéhyde, le para formaldéhyde ou l'acétaldéhyde et de préférence le formaldéhyde, le rapport molaire d'un aldéhyde (F) et d'un phénol (P) est de 1,05:1 à 4:1, de préférence de 2:1 à 3:1 (F/P) et la réaction est conduite en présence d'une quantité suffisante d'eau pour ajuster la proportion de solides secs dans le produit à 25-75 % en poids, de préférence à 35-60 % en poids, le catalyseur alcalin est un oxyde, un hydroxyde ou un carbonate d'un métal alcalin ou d'un métal alcalino-terreux, une base organique ou un mélange de ceux-ci, et la proportion du catalyseur alcalin est de 0,1 à 12 % en poids.

3. Procédé selon la revendication 1 ou 2, **caractérisé en ce que** le pH de la résine est ajusté à une valeur en dessous de 8.

4. Procédé selon l'une quelconque des revendications 1 à 3, **caractérisé en ce que** des additifs, de préférence des agents anti-moussants, sont utilisés.

5. Procédé selon l'une quelconque des revendications 1 à 4, **caractérisé en ce que** l'agent tensioactif est l'amidon de froment, l'amidon de maïs, l'amidon de pomme de terre, l'amidon de froment modifié, l'amidon de maïs modifié, l'amidon de pomme de terre modifié ou un copolymère acrylique modifié.

6. Procédé selon l'une quelconque des revendications 1 à 5, **caractérisé en ce que** l'agent tensioactif est un copolymère acrylique modifié de façon hydrophobe.

7. Procédé selon l'une quelconque des revendications 1 à 6, **caractérisé en ce que** la proportion de l'agent tensioactif est de 0,01 à 10 % en poids, de préférence de 0,5 à 8,0 % en poids.

8. Procédé selon l'une quelconque des revendications 1 à 7, **caractérisé en ce que** l'acide est un acide organique ou inorganique ou un mélange de ceux-ci.

9. Procédé selon l'une quelconque des revendications 1 à 8, **caractérisé en ce que** l'acide est l'acide p-toluène sulfonique, l'acide acétique, l'acide sulfurique, l'acide phosphorique ou l'acide formique ou un mélange de ceux-ci.

10. Procédé selon l'une quelconque des revendications 1 à 9, **caractérisé en ce que** l'ajustement du pH utilisant un acide est assuré pendant le processus ou avant l'utilisation du produit.

11. Procédé pour la fabrication d'un précurseur ou d'une émulsion et/ou d'une dispersion de résine phénolique, qui fournit un réseau réticulé incolore ou légèrement coloré de polymère par polymérisation à thermodurcissement, **caractérisé en ce que** l'on fait réagir un aldéhyde, un composé phénolique choisi parmi le phénol, l'éthylphénol, le propylphénol ou le o-, m-, p-crésol et un catalyseur alcalin à une température de 40 à 100°C jusqu'à ce qu'un degré de condensation souhaité soit atteint, et le pH de la résine est ajusté à une valeur en dessous de 9 en utilisant un acide en présence d'un agent tensioactif choisi parmi l'amidon, l'amidon modifié, un homopolymère ou copolymère acrylique modifié ou non modifié ou un mélange de ceux-ci à une température en dessous du point d'ébullition et on obtient une émulsion et/ou une dispersion de résine phénolique.

12. Procédé selon la revendication 11, **caractérisé en ce que** le composé phénolique est le phénol, le composé aldéhyde est le formaldéhyde, le para formaldéhyde ou l'acétaldéhyde et de préférence le formaldéhyde, le rapport molaire d'un aldéhyde (F) et du phénol (P) est de 1,05:1 à 4:1, de préférence de 2:1 à 3:1 (F/P) et la réaction est conduite en présence d'une quantité suffisante d'eau pour ajuster la proportion de solides secs dans le produit à 25-75 % en poids, de préférence à 35-60 % en poids, le catalyseur alcalin est un oxyde, un hydroxyde ou un carbonate d'un métal alcalin ou d'un métal alcalino-terreux, une base organique ou un mélange de ceux-ci, et la proportion du catalyseur alcalin est de 0,1 à 12 % en poids.

13. Procédé selon la revendication 11 ou 12, **caractérisé en ce que** le pH des résines est ajusté à une valeur en dessous de 8.

14. Procédé selon l'une quelconque des revendications 11 à 13, **caractérisé en ce que** des additifs, de préférence des agents anti-moussants, sont utilisés.

15. Procédé selon l'une quelconque des revendications 11 à 14, **caractérisé en ce que** l'agent tensioactif est l'amidon de froment, l'amidon de maïs, l'amidon de pomme de terre, l'amidon de froment modifié, l'amidon de maïs modifié, l'amidon de pomme de terre modifié ou un copolymère acrylique modifié.

16. Procédé selon l'une quelconque des revendications 11 à 15, **caractérisé en ce que** l'agent tensioactif est un copolymère acrylique modifié de façon hydrophobe.

17. Procédé selon l'une quelconque des revendications 11 à 16, **caractérisé en ce que** la proportion du (des) agent(s) tensioactif(s) est de 0,01 à 10 % en poids, de préférence de 0,5 à 8,0 % en poids.

18. Procédé selon l'une quelconque des revendications 11 à 17, **caractérisé en ce que** l'acide est un acide organique ou inorganique ou un mélange de ceux-ci.

19. Procédé selon l'une quelconque des revendications 11 à 18, **caractérisé en ce que** l'acide est l'acide p-toluène sulfonique, l'acide acétique, l'acide sulfurique, l'acide phosphorique ou l'acide formique ou un mélange de ceux-ci.

20. Procédé selon l'une quelconque des revendications 11 à 19, **caractérisé en ce que** l'ajustement du pH utilisant un acide est assuré pendant la réaction ou avant l'utilisation du produit.

21. Procédé pour la fabrication d'une résine phénolique en poudre, qui fournit un réseau réticulé incolore ou légèrement coloré de polymère par polymérisation à thermodurcissement, **caractérisé en ce qu'**une émulsion et/ou dispersion de résine phénolique fabriquée selon le procédé de l'une quelconque des revendications 11 à 20 est séchée par atomisation ou séchée par lyophilisation, et facultativement broyée ou micronisée.

22. Procédé selon la revendication 21, **caractérisé en ce que** l'émulsion et/ou la dispersion de résine est séchée telle quelle ou est diluée avec de l'eau dans un rapport de 0 à 1:30 avant le séchage par atomisation, elle comprend facultativement des additifs, et facultativement tous les composants sont mélangés en continu avant le séchage par atomisation.

23. Emulsion et/ou dispersion de résine phénolique ou résine phénolique en poudre, **caractérisée en ce qu'**elle est fabriquée selon l'une quelconque des revendications 11 à 22.

24. Utilisation de l'émulsion et/ou de la dispersion de résine phénolique ou de la résine phénolique en poudre selon la revendication 23 dans la préparation de contreplaqué, de poutre lamellée et de placage de petit bois d'oeuvre lamellé ; dans la préparation de panneaux de bois composites, tels que les panneaux de fibres, les panneaux à particules orientées et les panneaux de particules ; dans les non tissés, dans l'imprégnation de papier, dans les matériaux d'isolation, dans les tissus de fibres, dans les matières en caoutchouc, dans les matériaux de couverture, comme agents de remplissage et dans les matières de moulage pour obtenir un réseau réticulé incolore ou légèrement coloré de polymère phénolique par polymérisation.
